(19) Europäisches Patentamt
European Patent Office
Office européen des brevets

(11) **EP 1 770 927 B1**

(12) **FASCICULE DE BREVET EUROPEEN**

(45) Date de publication et mention
de la délivrance du brevet:
**10.07.2013 Bulletin 2013/28**

(51) Int Cl.:
***H04L 12/931*** *(2013.01)*

(21) Numéro de dépôt: **06121316.1**

(22) Date de dépôt: **27.09.2006**

(54) **Système de commutation de paquets pour noeud de réseau de communication**

System zur Paketvermittlung in einem Telekommunikationsnetzknoten

Packet switching system for telecom network node

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.09.2005 FR 0552978**

(43) Date de publication de la demande:
**04.04.2007 Bulletin 2007/14**

(73) Titulaire: **Alcatel Lucent**
**75007 Paris (FR)**

(72) Inventeurs:
• **Noirie, Ludovic**
**91620, Nozay (FR)**

• **Post, Georg**
**91620, La Ville du Bois (FR)**
• **Cucchi, Silvio**
**20083, Gaggiano (Milano) (IT)**
• **Valente, Fabio**
**36045, Lonigo (Vicenza) (IT)**

(74) Mandataire: **Sciaux, Edmond et al**
**Alcatel-Lucent International**
**Intellectual Property & Standards**
**32 Avenue Kléber**
**92700 Colombes (FR)**

(56) Documents cités:
**US-A1- 2001 050 916    US-A1- 2002 044 546**
**US-A1- 2003 021 266    US-B1- 6 633 580**

**Description**

L'invention se situe dans le domaine des réseaux de télécommunication et concerne les systèmes de commutation utilisés dans les noeuds de réseau.

L'invention concerne plus particulièrement les systèmes de commutation aptes à traiter des données organisées en paquets (commutation de paquets). Elle concerne aussi les systèmes de commutation dits "multiservice", c'est-à-dire capables d'effectuer des commutations de paquets, mais aussi de traiter des données organisées selon d'autres formats de transmission (commutation de circuits), typiquement les données organisées en multiplex temporels (dits "TDM") tels que ceux conformes aux protocoles SDH ou SONET, ou encore ODU ("Optical Data Unit").

Le terme "paquet" désigne ici tout ensemble de données qui regroupe selon un format préétabli des données d'information à transmettre (appelées "charge utile", ou "payload" en anglais) et des données auxiliaires contenues par exemple dans un en-tête du paquet ("header" en anglais). L'en-tête contient en particulier une indication de la destination du paquet et généralement une classe de qualité de service. L'indication peut être une adresse de destination explicite ou un "label" représentatif de cette destination. Parmi les formats de paquets les plus courants, on peut citer les paquets IP (Internet Protocol), MPLS ou Ethernet qui sont de taille variable, et les cellules ATM qui sont de taille fixe.

Il est rappelé qu'un réseau comporte une pluralité de noeuds reliés entre eux par des liaisons de transmission. Un noeud est souvent relié à plusieurs autres noeuds et intègre alors des fonctions de routage pour aiguiller sélectivement les données portées par des signaux reçus de liaisons amont vers d'autres liaisons aval en fonction des destinations respectives des données. Certains noeuds ont des fonctions d'accès permettant l'introduction de données dans le réseau et/ou l'extraction de données à partir du réseau.

Pour réaliser une fonction de routage, un noeud est équipé d'un système de commutation ou plus simplement "commutateur" ("switch" en anglais). Un système de commutation comporte d'une part plusieurs ports d'entrée reliés par des liaisons amont à des émetteurs de stations d'utilisateurs ou d'autres noeuds, et d'autre part plusieurs ports de sortie reliés par des liaisons aval à des récepteurs d'autres stations d'utilisateurs ou d'autres noeuds. D'une façon générale, le système de commutation a pour fonction d'aiguiller les flux de données reçus par ses divers ports d'entrée, sélectivement en fonction de leurs destinations respectives, vers des ports de sortie affectés à ces destinations.

Un rôle essentiel d'un système de commutation est la gestion des conflits, c'est-à-dire le contrôle permanent de l'aiguillage des données de sorte que plusieurs données reçues destinées à un même port de sortie soient dirigées vers ce port à des instants différents. La performance d'un système est évaluée par sa bande passante, c'est-à-dire le débit total de données binaires qu'il peut en moyenne aiguiller sans pertes de données.

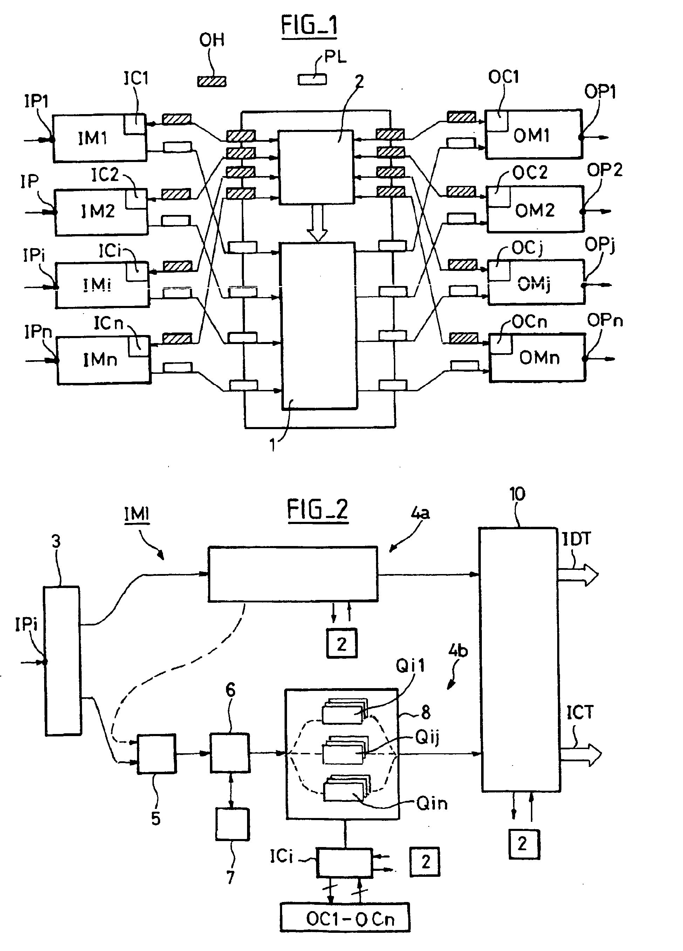

La figure 1 représente schématiquement une structure typique d'un système de commutation. Ce système comporte une matrice de commutation 1 pilotée par un contrôleur central 2, une pluralité de modules d'entrée IM1, IM2, IMi, IMn pilotés respectivement par des contrôleurs d'entrée IC1, IC2, ICi, ICn et une pluralité de modules de sortie OM1, OM2, OMj, OMn pilotés respectivement par des contrôleurs de sortie OC1, OC2, OCi, OCn. Les modules d'entrée sont reliés respectivement à des liaisons amont par des ports d'entrée IP1, IP2, IPi, IPn, et les modules de sortie sont reliés respectivement à des liaisons aval par des ports de sortie OP1, OP2, OPj, OPn. Les modules d'entrée et de sortie coopèrent d'autre part avec le contrôleur central 2 qui rassemble les fonctions centrales de commande du système.

Les données à commuter reçues par les ports d'entrée IPi sont transmises à la matrice par les modules d'entrée IMi, et en fonction de commandes reçues du contrôleur central 2, la matrice effectue un aiguillage sélectif de ces données vers les ports de sortie OPj par l'intermédiaire des modules de sortie OMj. Chaque module d'entrée IMi ou de sortie OMj communique aussi avec le contrôleur 2 pour échanger des signaux et informations de contrôle utiles au bon déroulement de l'aiguillage sélectif.

Plus précisément, chaque module d'entrée IMi a un rôle d'interface physique avec la liaison amont associée et comporte des moyens de mémorisation et de traitement des données reçues, ces moyens étant conçus pour stocker temporairement ces données, par exemple dans le cas de paquets en formant et gérant des files d'attente de paquets. Si plusieurs classes de qualité de service (ou plus simplement "classes de service") sont prévues dans le réseau, on prévoit plusieurs files d'attente affectées respectivement à ces classes.

Typiquement, chaque module d'entrée est prévu pour constituer plusieurs files d'attente organisées à la fois par ports de sortie destinataires et par classes de qualité de service. Ainsi, chacune de ces files contient les paquets en attente destinés à un port de sortie donné et bénéficiant d'une classe de qualité de service donnée. Les files d'attente ainsi organisées sont parfois appelées " files d'attente de sortie virtuelles" ou VOQ (pour "Virtual Output Queue" en anglais).

La gestion des files d'attente consiste d'une part à remplir ces files en permanence avec les nouvelles données reçues, et d'autre part à extraire de ces files les données autorisées à être transférées vers la matrice.

Les transferts de données entre les modules d'entrée IMi et la matrice de commutation 1 d'une part, et les transferts entre la matrice et les modules de sortie OMj d'autre part vont normalement s'effectuer par cycles de commutation successifs de durée constante, désignée par "durée de transfert" . Avantageusement, le commutateur sera en outre conçu pour qu'à chaque cycle de commutation chaque module d'entrée et de sortie puisse respectivement émettre et recevoir plusieurs paquets à la fois. Un module d'entrée sera par exemple prévu pour constituer et envoyer à chaque cycle un bloc de données comportant un ensemble de paquets, chaque bloc, de taille fixée, comportant plusieurs groupes de paquets associés respectivement aux différents modules de sortie, chaque groupe comprenant des paquets destinés à un même module de sortie associé à ce groupe. La taille d'un groupe est de préférence modifiable. Il peut aussi être subdivisé en sous-groupes associés respectivement à plusieurs canaux et/ou plusieurs classes de service. Un commutateur de ce type est décrit plus en détail dans la demande de brevet européen EP 1549103, publiée le 29 juin 2005.

Du brevet US 6 633 580 B1 est connu un type de commutateur dont l'arbitrage est distribué dans les ports de sortie, sur la base de reqêtes et d'informations fournies par les ports d'entrée.

Pour que la matrice puisse réaliser la commutation des données ainsi transférées, le contrôleur central doit en particulier connaître vers quels ports de sortie respectifs ces données transférées doivent être aiguillées par la matrice. Ces informations d'aiguillage sont obtenues à partir des destinations contenues dans les en-têtes des paquets et en fonction d'informations de routage chargées au préalable dans une table de routage. Les modules d'entrée sont chargés d'élaborer ces informations d'aiguillage et de les transmettre au contrôleur central en complément des paquets associés transférés vers la matrice. Le contrôleur prend alors en compte les informations d'aiguillage associées aux paquets de façon à pouvoir les aiguiller en conséquence.

Ces données de contrôle sont habituellement désignées par le terme anglais "overhead", aussi appelé "sur-débit" et s'ajoutent aux données d'information "utiles" dites "charges utiles" à commuter. Cet aspect est représenté sur la figure 1, où la charge utile et le sur-débit sont symbolisés respectivement par des rectangles blancs PL et des rectangles hachurés OH.

Préalablement aux opérations d'aiguillage proprement dites mentionnées ci-dessus, une fonction essentielle d'un système de commutation de paquets est le mécanisme qui permet de sélectionner en cours d'exploitation à quels moments combien de données de quelles files d'attentes sont autorisées à être transférées. Ce rôle est classiquement confié à des moyens dits "d'arbitrage" ("scheduler" ou "arbiter" en anglais) prévus pour effectuer les sélections selon des règles prédéfinies.

Pour identifier les données à sélectionner, les moyens d'arbitrage exécutent un algorithme d'arbitrage conçu pour optimiser le transfert des données selon des critères choisis. Entre autres critères possibles, on doit satisfaire au moins à ces conditions :

- éviter les conflits, comme déjà indiqué;
- autoriser les modules d'entrée à transférer par cycle des quantités de données compatibles avec les capacités maximales de transfert entre chaque module d'entrée et la matrice d'une part, et entre la matrice et chaque module de sortie d'autre part.

En outre, un bon mécanisme d'arbitrage devra généralement satisfaire aux conditions supplémentaires suivantes :

- effectuer des choix de paquets en attente avec un certaine "équité", c'est-à-dire traiter tous les paquets d'une même classe de service de façon équivalente en terme de délai de transfert moyen évalué sur un horizon temporel aussi court que possible, quels que soient les ports d'entrée et/ou les ports de sortie par lesquels ils transitent, par exemple en tenant compte des ordres d'arrivée des paquets à commuter;
- donner aux paquets à extraire des files d'attente des priorités différenciées, en fonction notamment de leurs classes de service respectives;
- contribuer à optimiser l'utilisation des ressources du commutateur, c'est-à-dire maximiser sa bande passante.

Pour mettre en oeuvre un mécanisme d'arbitrage, on peut envisager une réalisation centralisée, c'est-à-dire prévoir dans le contrôleur central 2 un sous-ensemble matériel et/ou logiciel, appelé dans la suite "unité d'arbitrage", apte à exécuter un algorithme d'arbitrage choisi. Cette unité d'arbitrage communique avec les modules d'entrée et/ou de sortie pour recevoir de ces derniers toutes les informations nécessaires à l'exécution de l'algorithme, et pour leur fournir les décisions d'arbitrage qui en résultent.

Pour cela, les modules d'entrée dialoguent chacun avec l'unité d'arbitrage selon le schéma général suivant. A des instants successifs, chaque module d'entrée envoie à l'unité d'arbitrage des requêtes ("Request" en anglais) l'informant des états de remplissage de ses files d'attente. En fonction des requêtes reçues de tous les modules d'entrée, l'unité d'arbitrage détermine selon les critères retenus les paquets des files d'attente à transférer vers la matrice, puis en informe tous les modules d'entrée sous la forme de messages d'autorisation ("Grant" en anglais). En fonction des messages d'autorisation qu'il reçoit, chaque module d'entrée effectue les mises à jour de ses files d'attente en procédant aux transferts des données correspondantes vers la matrice de commutation.

Cette réalisation centralisée présente toutefois l'inconvénient d'être complexe et de nécessiter de nombreux échanges d'informations, en particulier lorsque le nombre de ports d'entrée et de sortie devient élevé. En effet, l'unité d'arbitrage doit posséder des moyens de traitement suffisamment rapides pour prendre en compte périodiquement les états de disponibilité de tous les modules de sortie, les états de toutes les files d'attente de tous les modules d'entrée, et en réponse fournir aux modules d'entrée les informations d'autorisation relatives à toutes les files d'attente.

Le problème s'aggrave encore si les modules de sortie sont prévus chacun pour gérer plusieurs canaux de sortie partageant le même port de sortie.

Par exemple, un système de commutation à installer actuellement dans les réseaux optiques d'infrastructure ("backbone" en anglais) devra typiquement satisfaire au cahier des charges suivant :

- traiter à la fois les trafics de paquets et "TDM";
- gérer plusieurs centaines de canaux par port de sortie;
- prendre en compte des milliers de files d'attente dans chaque module d'entrée.

Un but de l'invention est de proposer un système de commutation dont les moyens d'arbitrage ont une architecture qui permet de relâcher les contraintes technologiques de réalisation, même pour un nombre élevé de ports d'entrée et de sortie, et de canaux de sortie.

Pour cela, il est proposé une architecture particulière à la fois répartie (ou distribuée) et hiérarchisée. Plus précisément, l'invention a pour objet un système de commutation pour noeud de réseau de communication, comprenant une pluralité de modules d'entrée et une pluralité de modules de sortie coopérant chacun avec une matrice de commutation et avec un contrôleur central commandant ladite matrice, chaque module de sortie possédant un port de sortie associé, ledit système étant apte à aiguiller sélectivement via la matrice et lesdits modules de sortie, des paquets de données reçus par lesdits modules d'entrée, en fonction de leurs destinations respectives, vers des ports de sortie destinataires respectifs,

- chaque module d'entrée comportant un contrôleur d'entrée pour commander des moyens aptes à organiser par files d'attente les paquets reçus, un ou plusieurs niveaux de priorité étant sélectivement attribué(s) aux paquets,
- chaque module de sortie comportant un contrôleur de sortie pour commander le transfert de chaque paquet reçu de la matrice vers un canal de sortie affecté au paquet et empruntant le port de sortie associé,

**caractérisé en ce qu'**une quantité dite "détaillée" de paquets relative à un couple de modules d'entrée et de sortie donné étant définie comme une quantité de données constitutives de paquet(s) reçu(s) par ce module d'entrée, bénéficiant d'un niveau de priorité donné et affecté(s) à un canal de sortie donné de ce module de sortie, une somme de quantités détaillées relatives à un même couple de modules d'entrée et de sortie, indépendamment des niveaux de priorité et/ou des canaux de sortie, définissant une quantité dite "agrégée" relative à ce couple,

lesdits contrôleurs d'entrée, de sortie et central intègrent des fonctions d'arbitrage reparties et exécutables par cycles d'arbitrage successifs, chaque cycle d'arbitrage comportant quatre phases successives:

- une première phase exécutable par le contrôleur d'entrée de chaque module d'entrée pour envoyer à chaque contrôleur de sortie des requêtes représentatives de quantités dite "requises" définies comme des quantités détaillées de paquets en attente dans ce module d'entrée et candidats pour être portés par le canal ou des canaux de sortie respectifs géré(s) par ce contrôleur de sortie,
- une seconde phase exécutable par le contrôleur de sortie de chaque module de sortie pour déterminer en fonction desdites requêtes des quantités dites "admissibles" de paquets définies comme des quantités détaillées de paquets, au plus égales respectivement auxdites quantités requises, que ce module de sortie est capable de faire transiter pendant une durée de transfert fixée, les quantités agrégées correspondant à ces quantités admissibles étant dites "agrégées admissibles",
- une troisième phase exécutable par une unité d'arbitrage central pour déterminer en fonction desdites quantités agrégées admissibles relatives à tous les couples de modules d'entrée et de sortie, des quantités dites "agrégées admises" définies comme des quantités agrégées de paquets, au plus égales respectivement auxdites quantités agrégées admissibles, que la matrice est capable de transférer pendant ladite durée de transfert ,
- une quatrième phase exécutable par le contrôleur d'entrée de chaque module d'entrée pour déterminer en fonction desdites quantités admissibles et desdites quantités agrégées admises relatives respectivement aux couples formés de ce module d'entrée et des modules de sortie, des quantités détaillées admises de paquets destinés aux canaux respectifs des modules de sortie, au plus égales aux quantités détaillées admissibles correspondantes et déterminées pour que les quantités agrégées qui en résultent ne dépassent pas lesdites quantités agrégées admises correspondantes.

Du fait d'une répartition de tâches qui peuvent s'exécuter en parallèle, cette solution est bien adaptée à des commutateurs de forte capacité, sans avoir à recourir à des moyens de traitement les plus rapides. En effet, les opérations effectuées par chaque contrôleur de sortie restent de complexité modérée car elles prennent en compte des informations détaillées issues des modules d'entrée, mais sans tenir compte de résultats d'opérations effectuées par les autres contrôleur de sortie. De même, l'unité d'arbitrage central présente une complexité fonction du nombre de modules d'entrée et de sortie, mais indépendamment du nombre de niveaux de priorité et du nombre de canaux de sortie par module de sortie.

En outre l'architecture étant modulaire, elle présente l'avantage d'être facilement évolutive, c'est-à-dire de permettre sans trop de difficultés d'adapter les éléments du système à des modifications du nombre de ports d'entrée et de sortie ou du nombre de canaux de sortie par module.

Tous ces aspects montrent que l'invention propose un système de commutation, avec une fonction d'arbitrage évolutive dont la rapidité peut être rendue compatible avec des systèmes de commutation complexes et de forte capacité, sans être limitée par les possibilités des technologies électroniques. Cela est particulièrement appréciable pour réaliser les systèmes de commutation multiservice mentionnés précédemment. En effet, le traitement par une même matrice de données de type TDM impose au système un fonctionnement synchronisé à un rythme imposé, ce qui constitue pour la fonction d'arbitrage une contrainte supplémentaire par rapport aux simples systèmes de commutation de paquets.

Selon un premier aspect de réalisation, le système est dimensionné pour que ladite durée de transfert soit inférieure à la durée des cycles d'arbitrage, et les débuts de deux cycles d'arbitrage consécutifs sont séparés temporellement par cette même durée de transfert.

De préférence, chaque phase des cycles d'arbitrage a une même durée égale à cette même durée de transfert.

D'autres buts, aspects et avantages de l'invention apparaîtront dans la suite de la description, qui concerne plusieurs modes de réalisation de l'invention donnés à titre purement illustratif et non limitatif, en référence aux figures.

- La figure 1 commentée précédemment représente schématiquement un exemple de système de commutation où un mode de réalisation de l'invention peut être mis en oeuvre.
- La figure 2 représente schématiquement un module d'entrée du système de commutation.
- La figure 3 est un diagramme montrant les fonctions respectives des contrôleurs du système selon un mode de réalisation de l'invention.
- La figures 4 représente sous forme de chronogramme les phases d'exécution qui composent un cycle d'arbitrage selon un mode de réalisation de l'invention.
- La figures 5 représente sous forme de chronogrammes le schéma de séquencement de plusieurs cycles d'arbitrage successifs dans le cas d'un dispositif selon un mode de réalisation de l'invention fonctionnant en mode pipe-line.

La figure 2 représente un des modules d'entrée IMi prévu pour un système de commutation tel que représenté à la figure 1 et de type "multiservice".

Le module IMi comporte dans ce cas une première voie 4a dédiée au traitement des multiplex temporels, dite voie TDM, et une seconde voie 4b pour le traitement des paquets, dite voie paquets. Les deux voies 4a, 4b sont reliées chacune en amont à un circuit d'interface d'entrée 3 et en aval à un circuit d'interface de sortie 10. Il faut noter que l'on peut aussi avoir des modules d'entrée ne comportant que la voie 4a (module d'entrée purement TDM) et aussi des modules d'entrée ne comportant que la voie 4b (module d'entrée purement paquet).

Le circuit d'interface d'entrée 3 reçoit par un port d'entrée associé IPi les signaux apportés par une liaisons amont. Ce circuit constitue essentiellement une interface physique avec la liaison par exemple pour réaliser une éventuelle conversion sous forme électrique des signaux reçus, pour leur mises en forme et leurs conversions sous forme numérique. Le circuit 3 intègre aussi une fonction d'aiguillage vers la voie TDM ou la voie paquets en fonction d'une commande de gestion de réseau qui détermine le type de format prévu, TDM ou paquets, des données reçues.

La voie TDM est essentiellement constituée d'un processeur TDM de type classique chargé d'effectuer des opérations de démultiplexage temporel et des transferts de données vers la matrice 1 en réponse à des dialogues échangés avec le contrôleur central 2.

La voie paquets se compose successivement d'un étage de reformatage des paquets 5, d'un étage de classement 6 et d'une mémoire 8 de files d'attente. L'ensemble est piloté par le contrôleur d'entrée ICi.

L'étage de classement 6 prend en compte les indications de destinations et les classes de qualité de service contenues dans les en-tête des paquets. L'étage 6 coopère avec une table de routage 7 pour déterminer en fonction de ces indications de destinations et d'informations de routage chargées au préalable dans la table 7 les modules et ports de sortie vers lesquels doivent être aiguillés les paquets reçus. Le cas échéant, si on a prévu plusieurs canaux par port de sortie, il détermine aussi les canaux respectifs affectés au transport de ces paquets. Les canaux peuvent être des canaux "physiques" matérialisés par exemple par plusieurs émetteurs reliés à des liaisons physiques séparées. I1 peut s'agir aussi de canaux temporels et/ou spectraux partageant une liaison physique commune.

En fonction de ces éléments, et sous le contrôle d'une unité de gestion des files d'attente du contrôleur d'entrée ICi, des files d'attente de paquets sont constituées dans la mémoire 8. En pratique, une file d'attente sera composée de paquets d'une même classe de qualité de service et destinés à un même port de sortie, et à un même canal de sortie si on a prévu plusieurs canaux par port de sortie.

Dans la suite pour désigner les objets traités, nous utiliserons les notations suivantes : l'indice i identifie l'un des modules d'entrée IMi, l'indice j identifie l'un des modules sortie OMj ou le port de sortie correspondant OPj, l'indice q identifie un des niveaux de priorité attribuables aux paquets, par exemple en relation avec les différentes classes de service prévues dans le réseau. Selon les cas, on peut ajouter d'autres indices, tel qu'un indice k identifiant l'un des canaux gérés par le module sortie OMj. Dans la suite, par simplification, l'indice de canal k sera généralement omis, sachant que tous les objets affectés des trois indices i, j, q concerneront toujours implicitement un même canal de sortie.

Ainsi, dans un module d'entrée IMi, pour les paquets en attente bénéficiant du niveau de priorité q, et prévus pour être portés par un canal c du port de sortie OPj du module de sortie OMj, on définira une file d'attente correspondante Qijqc. Pour simplifier, seules apparaissent sur la figure les références Qi1, Qij, Qin qui désignent respectivement des ensembles distincts de files d'attente formés de tous les paquets reçus par le module d'entrée IMi et destinés respectivement aux modules de sortie OM1, OMj, OMn.

L'unité de gestion du contrôleur d'entrée ICi met à jour les files d'attente d'une part en fonction des nouveaux paquets reçus, et d'autre part en fonction d'autorisations de transferts de paquets en attente vers la matrice.

Ces autorisations résultent d'un mécanisme d'arbitrage, lequel sera décrit plus en détail après avoir donné quelques définitions utiles à sa compréhension.

On a déjà défini une quantité "détaillée" de paquets relative à un module d'entrée comme une quantité de données constitutives d'un ensemble de paquets reçus par ce module d'entrée, bénéficiant d'un niveau de priorité donné et affectés à un même canal de sortie d'un module de sortie donné. Cette quantité peut être par exemple un nombre d'octets ou de mots binaires ou de cellules ou de paquets si ces derniers sont de taille fixe.

Une "requête" est représentative d'une telle quantité détaillée de paquets en attente qu'un module d'entrée est prêt à transférer et qui sera désignée par quantité "requise" de paquets. Ainsi, une requête RQijq est représentative d'une quantité requise, notée également RQijq, qui sera une quantité détaillée de paquets en attente dans le module d'entrée IMi, candidats pour être portés par un même canal géré par le contrôleur de sortie OCj du module de sortie OMj, et bénéficiant du niveau de priorité q. Dans le cas où plusieurs canaux sont gérés, une requête concernant les paquets en attente destinés à être transportés par le canal k, pourrait être désignée plus précisément par RQijqk. Pour simplifier l'exposé, l'indice de canal k sera toutefois omis.

Une quantité dite "agrégée" de paquets est d'une façon générale définie comme la somme de plusieurs quantités détaillées relatives à un couple donné de modules d'entrée et de sortie IMi-OMj, pour tous les niveaux de priorité q et pour tous les canaux de sortie gérés par le module de sortie OMj du couple.

Une quantité "détaillée admissible" (ou plus simplement quantité "admissible") de paquets, notée PGRijq, est définie pour un module de sortie OMj donné comme une quantité détaillée de paquets relative à un module d'entrée donné IMi, conforme à la définition ci-dessus (c'est-à-dire en attente dans ce module d'entrée IMi, destinés à ce module de sortie OMj, bénéficiant d'un niveau de priorité q donné, affectés à un même canal de sortie), et que ce module de sortie OMj serait capable de faire transiter en concurrence avec d'autres quantités admissibles relatives aux autres modules d'entrée, pour le même canal de sortie, et pendant une même durée de transfert fixée T d'un même cycle de commutation.

Une quantité "agrégée admissible" de paquets, notée APGRij, relative à un couple donné de modules d'entrée et de sortie IMi-OMj est définie comme la somme de toutes ces quantités "admissibles" pour ce couple, pour tous les niveaux de priorité q et pour tous les canaux de sortie gérés par le contrôleur du module de sortie OMj du couple.

Une quantité "détaillée admise" (ou plus simplement quantité "admise") de paquets relative à un module d'entrée donné IMi, notée GRijq, est définie comme une quantité détaillée de paquets que le contrôleur d'entrée ICi de ce module d'entrée s'autorise à transférer pendant une même durée de transfert T d'un même cycle de commutation.

Une quantité "agrégée admise" de paquets pour un module d'entrée IMi et relative à un couple formé de ce module d'entrée et d'un module de sortie donné OMj, notée AGRij, est définie comme une quantité agrégée de paquets que le contrôleur d'entrée ICi de ce module d'entrée est autorisé à transférer pendant une même durée de transfert T d'un même cycle de commutation, en concurrence avec d'autres quantités agrégées admises relatives aux autres couples formés de ce module d'entrée et des autres modules de sortie.

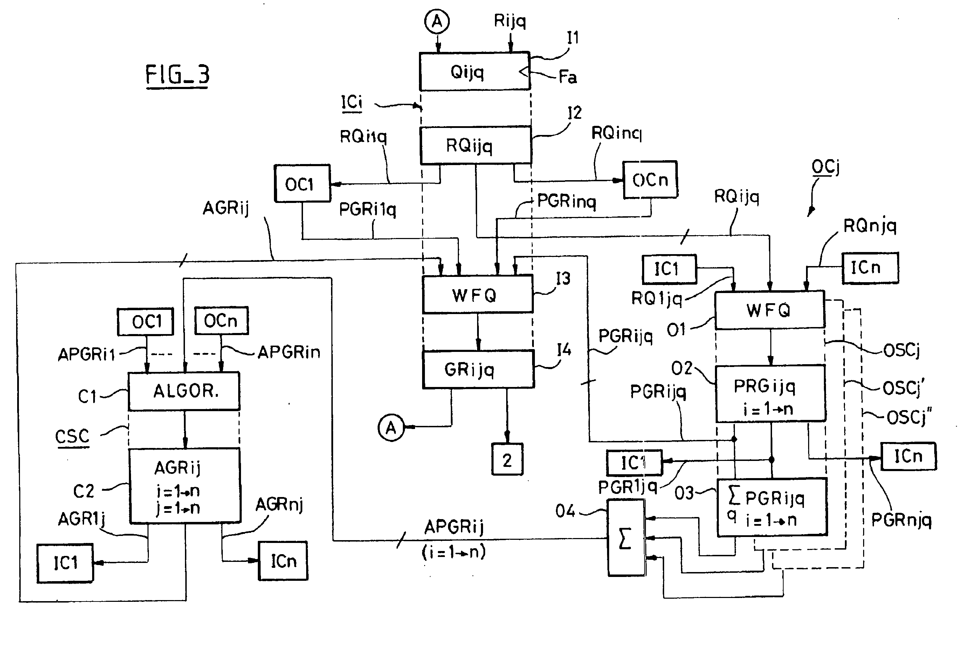

Le diagramme de la figure 3 permet de décrire les rôles d'arbitrage respectifs des contrôleurs d'entrée et de sortie ICi, OCj et de l'unité d'arbitrage central CSC du système.

La figure 3 illustre plus particulièrement les opérations qui concernent les paquets reçus par le module d'entrée IMi, bénéficiant du niveau de priorité q et destinés à un canal de sortie particulier (non référencé) d'un port de sortie géré par le module de sortie OMj.

Les opérations d'arbitrage sont effectuées de façon cyclique, à un rythme donné. Ce rythme est en principe à fréquence constante Fa, mais il pourrait le cas échéant suivre d'autres règles. On peut noter que les durées des cycles d'arbitrage ne sont pas conditionnées par la période des cycles de commutation, c'est-à-dire la durée de transfert T mentionnés précédemment. Les cycles d'arbitrage peuvent notamment avoir des durées multiples de la durée de transfert comme nous le verrons ultérieurement.

Comme représenté schématiquement sur le diagramme, un cycle d'arbitrage est initialisé en A par les contrôleurs d'entrée. Il débute dans chaque module d'entrée IMi par une mise à jour de chaque file d'attente (étape I1). La taille Qijq de la file est ainsi mise à jour à partir de sa taille initiale et en fonction de la quantité de nouveaux paquets Rijq reçus au cours du cycle précédent et relatifs à cette file, et de la quantité de paquets ayant été autorisés au cycle précédent à être commutés (c'est-à-dire la quantité détaillée admise de paquets).

Le contrôleur d'entrée ICi prépare ensuite pour chaque file une requête associée RQijq représentative de la quantité détaillée de paquets RQijq en attente candidats pour être portés par le canal de sortie correspondant à cette file (étape 12).

Toutes ces requêtes RQi1q, RQijq, RQinq sont alors envoyées aux contrôleurs de sortie respectivement concernés OC1, OCj, OCn.

S'il est prévu plusieurs canaux de sortie par port de sortie, le contrôleur d'entrée ICi enverra donc en particulier au contrôleur de sortie OCj une requête RQijq pour chaque niveau de priorité q et pour chaque canal de sortie géré par ce contrôleur de sortie.

Le contrôleur de sortie OCj reçoit alors de tous les contrôleur d'entrée IC1, ICi, ICn toutes leurs requêtes RQ1jq, RQijq, RQnjq respectives.

Dans le cas de plusieurs canaux de sortie par port de sortie, la fonction d'arbitrage de sortie peut avantageusement être subdivisée en plusieurs unités d'arbitrage de sortie indépendantes dédiées respectivement aux canaux. Ces unités OSCj, OSCj', OSCj" peuvent exécuter en parallèle les opérations relatives aux canaux respectifs, ce qui permet un temps de traitement indépendant du nombre de canaux.

La figure 3 montre plus en détail les opérations effectuées par l'une d'elles OSCj. Après réception des requêtes RQijq concernant le canal associé, l'unité d'arbitrage de sortie OSCj met en oeuvre un algorithme de choix (étape O1) qui détermine en réponse aux requêtes RQijq, parmi des quantités de paquets candidats en attente dans les différents modules d'entrée IMi, des quantités détaillées admissibles correspondantes PGRijq.

Ces quantités détaillées admissibles sont déterminées pour respecter au moins la condition suivante : il faut que le module de sortie soit capable de faire transiter pendant la durée de transfert T par chaque canal de sortie la totalité, calculée pour tous les modules d'entrée, des quantités détaillées admissibles de paquets candidats pour être portés par ce même canal. En pratique, cette condition revient à limiter la somme de toutes les quantités détaillées admissibles relatives à tout canal de sortie donné à une capacité maximale de transfert permise par ce canal.

Au cas où il résulte de l'ensemble des requêtes RQijq reçues que la totalité des quantités détaillées de paquets candidats pour un même canal de sortie dépasseraient sa capacité maximale, l'algorithme intervient pour choisir des quantités inférieures. Avantageusement, l'algorithme est choisi pour appliquer une règle d'équité visant à accorder aux paquets d'un même niveau de priorité q une même priorité moyenne de traitement, quel que soit le module d'entrée IMi où ces paquets sont en attente. D'autre part, l'algorithme tient compte évidemment des niveaux de priorité q en fixant des quantités détaillées admissibles d'autant plus importantes proportionnellement que le niveau de priorité est élevé.

Pour cela, on peut utiliser un algorithme de type classique tel que l'algorithme dit "WFQ" (pour "Weighted Fair Queuing" en anglais).

Une fois calculées, ces quantités détaillées admissibles PGR1jq, PGRijq, PGRnjq sont transmises aux différents contrôleurs d'entrée respectivement concernés IC1, ICi, ICn (étape 02).

Les mêmes opérations sont effectuées en parallèle par toutes les unités d'arbitrage de sortie de tous les contrôleurs de sortie. En conséquence, le contrôleur d'entrée ICi par exemple va recevoir des différents contrôleurs de sortie OC1, OCj, OCn toutes les quantités détaillées admissibles PGRilq PGRijq PGRinq qui le concernent (étape 13).

Pour chaque module d'entrée IMi est aussi calculée par chaque contrôleur de sortie OCj la somme de toutes les quantités admissibles pour tous les niveaux de priorité q (étape O3), et pour tous les canaux de sortie gérés par le module de sortie (étape O4). On obtient ainsi des quantités agrégées admissibles de paquets APGRij, pour les n couples formés du module de sortie OMj considéré et des n modules d'entrée IM1, IMi, IMn.

Ces valeurs APGRij, pour i = 1 à n sont alors transmises à l'unité d'arbitrage central CSC. Celle-ci reçoit donc en parallèle les valeurs des quantités agrégées admissibles de paquets APGRij, pour j = 1 à n, calculées par tous les contrôleurs de sortie OC1, OCj, OCn.

En variante, les opérations des étapes 03 et 04 pourraient aussi être effectuées par l'unité d'arbitrage central, voire dans une autre unité dédiée. Evidemment, il conviendrait alors que les quantités admissibles calculées par chaque contrôleur de sortie OCj soient transmises à l'unité d'arbitrage central (ou à l'unité dédiée) pour que celle-ci puisse calculer les quantités agrégées admissibles correspondantes.

L'unité d'arbitrage central CSC exécute alors un algorithme de choix (étape C1) pour déterminer en fonction de toutes les valeurs APGRij reçues, pour i = 1 à n et j = 1 à n, des quantités agrégées "admises" de paquets AGRij correspondantes. Celles-ci sont des quantités agrégées de paquets, au plus égales respectivement aux quantités agrégées admissibles, que la matrice 1 est capable de transférer pendant la durée de transfert T d'un même cycle de commutation.

Avantageusement, l'algorithme de choix détermine des quantités agrégées admises AGRij en appliquant une règle d'équité visant à accorder aux paquets candidats concernés une même priorité moyenne de traitement quel que soit le port de sortie OP1, OPj, OPn destinataire considéré.

L'algorithme peut par exemple être défini de la façon suivante.

En définissant une "capacité d'entrée" comme une quantité maximale de données pouvant être transférée entre un module d'entrée IMi et la matrice 1 pendant la durée de transfert T, la fonction d'arbitrage central détermine les quantités agrégées admises en multipliant chaque quantité agrégée admissible APGRij par un facteur de proportionnalité qui vaut 1 si la somme de toutes les quantités agrégées admissibles APGRij relatives à ce module d'entrée IMi est inférieure ou égale à la capacité d'entrée, et dans le cas contraire, qui prend sensiblement une valeur K telle que le produit de cette valeur K par la somme des quantités agrégées admissibles APGRij soit égal à la capacité d'entrée.

Pour une quantité agrégée admissible APGRij donnée, le facteur de proportionnalité appliqué sera choisi proche de la valeur K et de sorte que son produit par la quantité agrégée admissible APGRij associée soit un nombre entier, compte tenu du fait que les quantités de données sont elles-mêmes des nombres entiers d'octets ou de mots binaires ou de cellules. On peut noter que des facteurs de proportionnalité inférieurs à K appliqués à certaines quantités agrégées admissibles pourront être compensés des facteurs de proportionnalité supérieurs à K appliqués à d'autres quantités agrégées admissibles de façon à ce que la somme des quantités agrégées admises soit la plus proche possible de la capacité d'entrée, sans toutefois la dépasser.

Les quantités agrégées admises AGRij ainsi calculées, pour i = 1 à n et j = 1 à n, sont alors transmises aux différents contrôleur d'entrée IC1, ICi, ICn concernés (étape C2).

Chaque contrôleur d'entrée, tel que ICi, dispose ainsi d'une part des quantités agrégées admises AGRij relatives aux n couples formés du module d'entrée IMi considéré, et des n modules de sortie OM1, OMj, OMn. Il dispose d'autre part des quantités détaillées admissibles PGRijq relatives à ces mêmes couples, pour tous les niveaux de priorité et tous les canaux de sortie. En fonction de ces données, le contrôleur d'entrée détermine alors des quantités détaillées admises GRijq de paquets (étape I3).

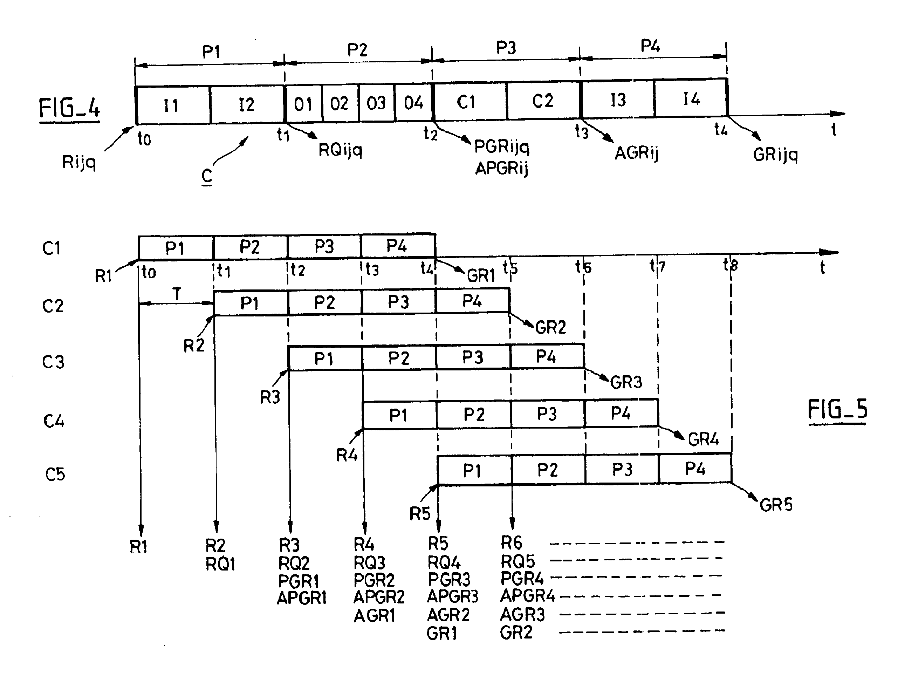

La détermination des quantités détaillées admises GRijq constitue la fin d'un cycle d'arbitrage (étape 14) et le processus peut se poursuivre par un retour au point de départ A de l'étape I1 pour le cycle suivant. Un fonctionnement en mode pipe-line est également possible. Il sera décrit plus loin à l'aide des figures 4 et 5.

Les quantités détaillées admises GRijq sont déterminées pour que les quantités agrégées qui en résultent ne dépassent pas les quantités agrégées admises AGRij et pour rester au plus égales aux quantités détaillées admissibles PGRijq correspondantes.

Ces quantités détaillées admises sont calculées par exemple en appliquant simplement une règle de proportionnalité entre les quantités détaillées admises GRijq et les quantités détaillées admissibles PGRijq, avec des coefficients identiques ou au moins voisins qui permettent d'assurer que la somme de toutes les quantités détaillées admises GRijq relatives à tout couple formé de ce module d'entrée IMi et d'un module de sortie quelconque OMj, ne dépasse pas les quantités agrégées admises AGRij correspondantes. Optionnellement, on pourrait utiliser à la place un algorithme de choix appliquant une règle d'équité du type "WFQ" déjà mentionné.

Les quantités détaillées admises GRijq ainsi déterminées permettent de définir les tailles de sous-groupes de données de paquets correspondants et ainsi former des groupes et blocs de données prêts à être transférés vers la matrice. Le transfert d'un bloc est effectué pendant la durée de transfert T d'un même cycle de commutation et le transfert de l'ensemble des données dont les quantités sont définies par un cycle d'arbitrage pourra s'effectuer durant l'exécution du cycle d'arbitrage suivant.

Les figures 4 et 5 vont permettre d'expliquer plus en détails divers modes envisageables de fonctionnement du mécanisme d'arbitrage.

La figures 4 est une représentation sous forme de chronogramme des différentes étapes décrites ci-dessus et qui constituent donc un cycle d'arbitrage complet impliquant particulièrement le module d'entrée IMi et un canal particulier du module sortie OMj pour des données d'une classe de service particulière q.

Les étapes ont en outre été regroupées de façon à faire ressortir quatre phases principales P1 à P4 d'exécution du cycle d'arbitrage :

- la phase P1 regroupe les étapes I1 et I2 exécutées par le contrôleur d'entrée ICi,
- la phase P2 regroupe les étapes O1 à 04 exécutées par le contrôleur de sortie OCj,
- la phase P3 regroupe les étapes C1 et C2 exécutées par l'unité d'arbitrage central CSC,
- la phase P4 regroupe les étapes I3 et I4 exécutées par le contrôleur d'entrée IMj.

Ainsi, la première phase P1 du cycle d'arbitrage débute à l'instant t0 par la prise en compte par chaque contrôleur d'entrée ICi de nouveaux paquets reçus et non encore pris en compte par aucun cycle d'arbitrage précédent. Pour le couple IMi-OMj, ces nouveaux paquets correspondent alors à des quantités détaillées notées Rijq.

La phase P1 se termine par l'envoi par le contrôleur d'entrée ICi vers chaque contrôleur de sortie OCj d'une requête représentative de la quantité détaillée de paquets RQijq en attente et candidats pour être commutés.

La seconde phase P2 débute à l'instant t1 par la prise en compte par le contrôleur de sortie OCj de chaque requête qui le concerne, se poursuit par l'envoi vers chaque contrôleur d'entrée ICi des quantités admissibles PGRijq calculées et se termine par l'envoi vers l'unité d'arbitrage central CSC des quantités agrégées admissibles APGRij correspondantes.

La troisième phase P3 débute à l'instant t2 par la prise en compte par l'unité d'arbitrage central CSC de toutes les quantités agrégées admissibles APGRij relatives à tous les couples de contrôleurs d'entrée et de sortie, et se termine par l'envoi vers chaque contrôleur d'entrée, en particulier ICi, des quantités agrégées admises AGRij calculées qui le concernent.

La quatrième phase P4 débute à l'instant t3 par la prise en compte par le contrôleur d'entrée ICi des quantités agrégées admises AGRij et se termine par le calcul de quantités détaillées admises GRijq dont le résultat est disponible à l'instant t4.

Selon une première possibilité, on peut concevoir le système pour que de tels cycles d'arbitrage se succèdent, un cycle ne débutant qu'après le déroulement complet des quatre phases constituant le cycle précédent. Dans ce cas, le cycle qui succédera au cycle représenté à la figure 4 débutera au plus tôt à l'instant t4 et les opérations effectuée selon les quatre phases P1 à P4 décrites ci-dessus vont se répéter.

Ce mode de fonctionnement présente la particularité qu'en début de chaque cycle d'arbitrage, les tailles des files d'attente Qijq à cet instant sont parfaitement déterminables simplement en retranchant aux tailles qu'avaient les files d'attente au début du cycle d'arbitrage précédent les quantités admises correspondantes GRijq et en y ajoutant les quantités de nouveaux paquets reçus Rijq pendant la durée de ce cycle d'arbitrage précédent.

Pour faciliter la suite des explications, nous allons désigner les diverses quantités de paquets impliquées au moyen d'une notation simplifiée qui introduit un indice de numéro de cycle c et en supprimant les indices ijq considérés comme implicites. Ainsi, la "quantité requise" RQc au cycle c est égale à la taille effective en début de cycle de la file d'attente Qc associée. Pour un cycle c et en appelant Rc la quantité de "nouveaux" paquets (c'est-à-dire tous ceux reçus mais non encore pris en compte par les cycles précédents), la taille de la file d'attente est la somme de Rc et du cumul des différences Rx-GRx pour x =1 à c-1. Donc :

$$RQc = Rc + \Sigma(Rx-GRx), \quad x = 1 \text{ à } c-1.$$

Ce mode de fonctionnement impose aux données dont les quantités sont calculées par un cycle d'arbitrage une durée de transfert T qui est au moins aussi longue que la durée du cycle d'arbitrage, même si les circuits spécifiques réalisant le transfert permettaient un transfert effectif pendant une durée inférieure.

Or, du fait que les fonctions d'arbitrage sont reparties et donc exécutables par des moyens de traitement pouvant fonctionner en parallèle, il est possible de concevoir le système pour que la durée de transfert T soit inférieure à la durée des cycles d'arbitrage en prévoyant un fonctionnement de type pipeline. Les débuts de deux cycles d'arbitrage consécutifs seront alors séparés temporellement par cette durée de transfert T. Ceci permettra un fonctionnement du système de commutation à plus fort débit.

Bien entendu, il conviendra d'ajuster la durée T et/ou celles des phases P1 à P4 pour qu'à chaque instant les cycles d'arbitrage simultanément en cours d'exécution utilisent des ressources de traitement différentes.

Un cas particulier qui permet la durée de transfert T la plus courte par rapport à celle des cycles d'arbitrage est celui où le système est dimensionné pour que chacune des phases P1 à P4 ait une même durée égale à la durée de transfert T.

Cette dernière possibilité est illustrée par le chronogramme de la figures 5 qui représente cinq cycles d'arbitrage consécutifs c1 à c5. Le premier cycle c1 débute à l'instant t0 et les instants t1, t2, t3, t4 correspondent aux fins respectives des phases P1, P2, P3, P4 de ce premier cycle c1. Les instants t1, t2, t3, t4 correspondent aussi respectivement aux débuts des cycles suivants c2, c3, c4, c5, les débuts de deux cycles consécutifs étant décalés temporellement de T.

La figure montre aussi, avec les notations simplifiées, les différentes quantités de paquets détaillées Rx, RQx, PGRx, GRx et agrégées APGRx, AGRx, pour x = 1 à 5, disponibles aux instants t1, t2, t3, t4, t5 et relatives respectivement aux cycles successifs c1 à c5.

On peut remarquer qu'une quantité admise, par exemple GR1 calculée par le premier cycle c1 et disponible à l'instant t4, ne peut pas être prise en compte par les trois cycles suivants c2 à c4 mais seulement par le cycle c5 (ou un cycle ultérieur). Par contre, les quantités de nouveaux paquets R1-R5 reçus pendant les durées de transfert T consécutives correspondantes peuvent l'être à chaque cycle.

Or, la différence RQ1-GR1, disponible à l'instant t4, constitue une quantité "requise mais non admise" qui devra être prise en compte en tant que quantité requise "partielle" d'un cycle ultérieur.

Mais on voit aussi qu'à l'instant t2 le contrôleur de sortie dispose de la quantité détaillée admissible PGR1 et de la quantité détaillée requise correspondantes RQ1 relatives au premier cycle c1 (disponible dès l'instant t1). Or, la différence RQ1-PGR1 est une "quantité requise mais non admissible" et qui constitue en fait une limite inférieure de la quantité requise mais non admise RQ1-GR1. La différence RQ1-PGR1 peut aussi être considérée comme une partie de la quantité requise partielle RQ1-GR1 à prendre en compte ultérieurement, mais sa valeur est disponible dès l'instant t2. Ainsi la différence RQ1-PGR1 peut être prise en compte en tant que quantité requise partielle par le second cycle c2. Dans ce cas, seule une quantité requise "résiduelle" PGR1-GR1 restera encore à prendre en compte à partir de l'instant t4.

Ce processus de cumul peut alors s'appliquer à chaque cycle.

Ainsi, chaque quantité requise pour un cycle c sera égale à la somme de la quantité requise mais non admissible correspondante calculée au cycle précédent RQ(c-1)-PGR(c-1), et d'une quantité requise dite "complémentaire" constituée :

- de la quantité Rc de nouveaux paquets reçus pendant l'intervalle de temps de durées T qui sépare les débuts des cycles c-1 et c,
- de la quantité requise résiduelle calculée lors du cycle c-4 : PGR(c-4)-GR(c-4).

De telles quantités requises complémentaires peuvent être calculées par le contrôleur d'entrée et constituer l'information portée par les requêtes transmises respectivement aux contrôleurs de sortie concernés.

On peut donc formuler ce mécanisme d'anticipation de la façon suivante : lorsqu'au cours d'un cycle donné, pour un canal de sortie donné et un niveau de priorité donné, une quantité admissible PGRijq est inférieure à la quantité requise RQijq correspondante, leur différence est mémorisée par le contrôleur de sortie OCj en tant que quantité requise non admissible à ajouter à une quantité requise complémentaire correspondante pour former la quantité requise à prendre en compte au cycle suivant, cette quantité requise complémentaire étant reçue du contrôleur d'entrée ICi au moyen d'une requête émise au cycle suivant.

On peut prévoir un mécanisme d'anticipation analogue à l'égard des quantités admissibles et des quantités admises en transposant le raisonnement précédent qui portait sur les quantités requises et les quantités admissibles respectivement aux quantités admissibles et aux quantités admises, et de la même façon respectivement aux quantités agrégées admissibles et aux quantités agrégées admises.

On peut donc formuler ce second mécanisme d'anticipation de la façon suivante : lorsqu'au cours d'un cycle donné, pour un couple de modules d'entrée et de sortie IMi, OMj donné, une quantité agrégée admise AGRij est inférieure à la quantité agrégée admissible APGRij correspondante, leur différence est mémorisée par l'unité d'arbitrage central CSC en tant que quantité agrégée admissible non admise à ajouter à une quantité agrégée admissible complémentaire correspondante pour former la quantité agrégée admissible à prendre en compte au cycle suivant, cette quantité agrégée admissible complémentaire étant calculée pour ce couple au cycle suivant,

et lorsqu'au cours d'un cycle donné, pour un canal de sortie donné du module de sortie de ce couple et un niveau de priorité donné, une quantité admise GRijq est inférieure à la quantité admissible PGRijq correspondante, leur différence est mémorisée par le contrôleur d'entrée ICi en tant que quantité admissible non admise à ajouter à une quantité admissible complémentaire correspondante pour former la quantité admissible à prendre en compte au cycle suivant, cette quantité admissible complémentaire étant calculée pour ce couple au cycle suivant.

Ce second mécanisme d'anticipation pourrait être mis en oeuvre seul, indépendamment du premier, ou bien en combinaison. Selon le cas, il convient alors de donner une définition de la quantité requise résiduelle mentionnée plus haut qui tienne compte des mécanismes d'anticipation utilisés.

Dans le cas où seul le second mécanisme est utilisé, la quantité requise résiduelle correspondra à une quantité requise mais non admissible RQ-PGR. Ainsi, on peut montrer que la quantité requise complémentaire mentionnée plus haut relative au cycle c sera constituée :

- de la quantité Rc de nouveaux paquets reçus pendant l'intervalle de temps de durée T qui sépare les débuts des cycles c-1 et c,
- de la quantité requise résiduelle calculée lors du cycle c-3 : RQ(c-3)- PGR(c-3).

Néanmoins, la mise en oeuvre à la fois des deux mécanismes d'anticipation reste préférable. Dans ce cas, il n'existe plus de quantité requise résiduelle et la quantité requise complémentaire se réduit à la quantité Rc de nouveaux paquets reçus pendant l'intervalle de temps de durées T qui sépare les débuts des cycles c-1 et c.

L'avantage de ces dispositions est qu'elles évitent de renvoyer une requête pour les mêmes paquets en cas d'autorisation négative (comptabilisée par les quantités requises, mais non admissibles et/ou non admises), et donc cela évite un délai supplémentaire dans l'envoi de ces paquets, car un seul cycle complet d'envoi, de réception et de traitement des requêtes, puis d'envoi, de réception et de traitement des autorisations nécessite quatre phases successives, les paquets concernés n'étant effectivement envoyés qu'à la fin de ce cycle complet, et seulement en cas d'autorisation positive. Donc en cas d'autorisation au cours d'un premier cycle (comptabilisée par les quantités requises et admises au cours du même cycle), les paquets ne sont envoyés qu'au bout de quatre phases. En cas de refus et d'acceptation au cours du cycle suivant, si l'on ne réserve pas par exemple la différence PGRijq-GRijq au cycle suivant, il faut attendre la durée d'exécution de 8 phases, alors que si l'on réserve cette différence au cycle suivant, il faut attendre la durée d'exécution de 5 phases seulement. La différence est encore plus importante en cas de refus successifs multiples.

## Revendications

**1.** Système de commutation pour noeud de réseau de communication, comprenant une pluralité de modules d'entrée (IM1, IM2, IMi, IMn) et une pluralité de modules de sortie (OM1, OM2, OMj, OMn) coopérant chacun avec une matrice de commutation (1) et avec un contrôleur central (2) commandant ladite matrice (1), chaque module de sortie (OMj) possédant un port de sortie associé (OPj), ledit système étant apte à aiguiller sélectivement via la matrice (1) et lesdits modules de sortie, des paquets de données reçus par lesdits modules d'entrée, en fonction de leurs destinations respectives, vers des ports de sortie (OP1, OP2, OPj, OPn) destinataires respectifs,

- chaque module d'entrée (IMi) comportant un contrôleur d'entrée (ICi) pour commander des moyens aptes à organiser par files d'attente (Qi1, Qij, Qin) les paquets reçus, un ou plusieurs niveaux de priorité étant sélectivement attribué(s) aux paquets,
- chaque module de sortie (OMj) comportant un contrôleur de sortie (OCj) pour commander le transfert de chaque paquet reçu de la matrice (1) vers un canal de sortie affecté au paquet et empruntant le port de sortie associé (OPj), **caractérisé en ce qu'**une quantité dite "détaillée" de paquets relative à un couple de modules d'entrée et de sortie (IMi, OMj) donné étant définie comme une quantité de données constitutives de paquet(s) reçu(s) par ce module d'entrée, bénéficiant d'un niveau de priorité donné et affecté(s) à un canal de sortie donné de ce module de sortie, une somme de quantités détaillées relatives à un même couple de modules d'entrée et de sortie, indépendamment des niveaux de priorité et/ou des canaux de sortie, définissant une quantité dite "agrégée" relative à ce couple,

lesdits contrôleurs d'entrée (ICi), de sortie (OCj) et central (2) intègrent des fonctions d'arbitrage reparties et exécutables par cycles d'arbitrage successifs (c), chaque cycle d'arbitrage comportant quatre phases successives (P1-P4) :

- une première phase (P1) exécutable par le contrôleur d'entrée (ICi) de chaque module d'entrée (IMi) pour envoyer à chaque contrôleur de sortie (OCj) des requêtes représentatives de quantités dite "requises" (RQijq) définies comme des quantités détaillées de paquets en attente dans ce module d'entrée et candidats pour être portés par le canal ou des canaux de sortie respectifs géré(s) par ce contrôleur de sortie (OCj),
- une seconde phase (P2) exécutable par le contrôleur de sortie (OCj) de chaque module de sortie (OMj) pour déterminer en fonction desdites requêtes des quantités dites "admissibles" de paquets (PGRijq) définies comme des quantités détaillées de paquets, au plus égales respectivement auxdites quantités requises (RQijq), que ce module de sortie est capable de faire transiter pendant une durée de transfert fixée (T), les quantités agrégées correspondant à ces quantités admissibles étant dites "agrégées admissibles" (APGRij),
- une troisième phase (P3) exécutable par une unité d'arbitrage central (CSC) pour déterminer en fonction desdites quantités agrégées admissibles (APGRij) relatives à tous les couples de modules d'entrée et de sortie (IMi, OMj), des quantités dites "agrégées admises" (AGRij) définies comme des quantités agrégées de paquets, au plus égales respectivement auxdites quantités agrégées admissibles, que la matrice (1) est capable de transférer pendant ladite durée de transfert (T),
- une quatrième phase (P4) exécutable par le contrôleur d'entrée (ICi) de chaque module d'entrée (IMi) pour déterminer en fonction desdites quantités admissibles (PGRijq) et desdites quantités agrégées admises (AGRij) relatives respectivement aux couples formés de ce module d'entrée (IMi) et des modules de sortie, des quantités détaillées admises (GRijq) de paquets destinés aux canaux respectifs des modules de sortie, au plus égales aux quantités détaillées admissibles (PGRijq) correspondantes et déterminées pour que les quantités agrégées qui en résultent ne dépassent pas lesdites quantités agrégées admises (AGRij) correspondantes.

**2.** Système de commutation selon la revendication 1, **caractérisé en ce qu'**il est dimensionné pour que ladite durée de transfert (T) soit inférieure à la durée desdits cycles d'arbitrage, et **en ce que** les débuts de deux cycles d'arbitrage consécutifs sont séparés temporellement par ladite durée de transfert (T).

**3.** Système de commutation selon la revendication 2, **caractérisé en ce que** chaque phase desdits cycles d'arbitrage a une même durée égale à ladite durée de transfert (T).

**4.** Système de commutation selon l'une des revendications 2 ou 3, **caractérisé en ce que** lorsqu'au cours d'un cycle donné, pour un canal de sortie donné et un niveau de priorité donné, une quantité admissible (PGRijq) est inférieure à la quantité requise (RQijq) correspondante, leur différence est mémorisée par le contrôleur de sortie (OCj) en tant que quantité requise non admissible à ajouter à une quantité requise complémentaire correspondante pour former la quantité requise à prendre en compte au cycle suivant, cette quantité requise complémentaire étant reçue du contrôleur d'entrée (ICi) au moyen d'une requête émise au cycle suivant.

**5.** Système de commutation selon l'une des revendications 2 à 4, **caractérisé en ce que** lorsqu'au cours d'un cycle donné, pour un couple de modules d'entrée et de sortie (IMi, OMj) donné, une quantité agrégée admise (AGRij) est inférieure à la quantité agrégée admissible (APGRij) correspondante, leur différence est mémorisée par l'unité d'arbitrage central (CSC) en tant que quantité agrégée admissible non admise à ajouter à une quantité agrégée admissible complémentaire correspondante pour former la quantité agrégée admissible à prendre en compte au cycle suivant, cette quantité agrégée admissible complémentaire étant calculée pour ce couple au cycle suivant, et **en ce que** lorsqu'au cours d'un cycle donné, pour un canal de sortie donné du module de sortie de ce couple et un niveau de priorité donné, une quantité admise (GRijq) est inférieure à la quantité admissible (PGRijq) correspondante, leur différence est mémorisée par le contrôleur d'entrée (ICi) en tant que quantité admissible non admise à ajouter à une quantité admissible complémentaire correspondante pour former la quantité admissible à prendre en compte au cycle suivant, cette quantité admissible complémentaire étant calculée pour ce couple au cycle suivant.

**6.** Système de commutation selon l'une des revendications 1 à 5, **caractérisé en ce que** l'exécution dans chaque contrôleur de sortie (OCj) de ladite seconde phase (P2) met en oeuvre une fonction d'arbitrage de sortie qui détermine à chaque cycle d'arbitrage parmi lesdites quantités requises (RQijq) de paquets ayant un même niveau de priorité et destinés à un même canal de sortie, lesdites quantités détaillées admissibles (PGRijq) en appliquant une première règle d'équité visant à accorder à ces paquets une même priorité moyenne de traitement, quel que soit le module d'entrée (IMi) où ils sont en attente.

**7.** Système de commutation selon la revendication 6, **caractérisé en ce que** ledit contrôleur de sortie (OCj) étant apte à gérer plusieurs canaux de sortie, ladite fonction d'arbitrage de sortie est réalisée au moyen de plusieurs unités d'arbitrage de sortie (OSCj, OSCj', OSCj") dédiées respectivement auxdits canaux.

**8.** Système de commutation selon la revendication 7, **caractérisé en ce que** chaque unité d'arbitrage de sortie (OSCj) met en oeuvre un algorithme de choix de type "WFQ" (Weighted Fair Queuing).

**9.** Système de commutation selon l'une des revendications 1 à 8, **caractérisé en ce que** l'exécution de ladite troisième phase (P3) dans l'unité d'arbitrage central (CSC) met en oeuvre une fonction d'arbitrage central qui détermine lesdites quantités agrégées admises (AGRij) en appliquant une seconde règle d'équité visant à accorder aux paquets candidats concernés une même priorité moyenne de traitement quel que soit le port de sortie (OP1, OPj, OPn) destinataire considéré.

**10.** Système de commutation selon la revendication 9, **caractérisé en ce qu'**une "capacité d'entrée" étant définie comme une quantité maximale de données pouvant être transférée entre un module d'entrée (IMi) et la matrice (1) pendant ladite durée de transfert (T), ladite fonction d'arbitrage central détermine lesdites quantités agrégées admises (AGRij) en multipliant chaque quantité agrégée admissible (APGRij) par un facteur de proportionnalité qui vaut 1 si la somme de toutes les quantités agrégées admissibles (APGRij) relatives à ce module d'entrée (IMi) est inférieure ou égale à ladite capacité d'entrée, et dans le cas contraire, qui prend sensiblement une valeur K telle que le produit de cette valeur K par ladite somme des quantités agrégées admissibles (APGRij) soit voisin et au plus égal à ladite capacité d'entrée.

**Patentansprüche**

**1.** Vermittlungssystem für einen Kommunikationsnetzwerkknoten, umfassend eine Vielzahl von Eingangsmodulen (IM1, IM2, IMi, IMn) und eine Vielzahl von Ausgangsmodulen (OM1, OM2, OMj, OMn), die jeweils mit einer Schaltmatrix (1) und einem zentralen Controller (2), welcher die besagte Matrix (1) steuert, zusammenwirken, wobei jedes Ausgangsmodul (OMj) einen assoziierten Ausgangsport (OPj) aufweist, wobei das besagte System fähig ist, über die Matrix (1) und die besagten Ausgangsmodule von den besagten Eingangsmodulen empfangene Datenpakete gemäß ihren jeweiligen Zieladressen selektiv an die entsprechenden Ziel-Ausgangsports (OP1, OP2, OPj, OPn) zu leiten, wobei

- jedes Eingangsmodul (IMi) einen Eingangs-Controller (ICi) umfasst, um Mittel, die für das Organisieren der besagten empfangenen Pakete in Warteschlangen (Qil, Qij, Din) geeignet sind, zu steuern, wobei den Paketen selektiv eine oder mehrere Prioritätsstufen zugeordnet werden,
- jedes Ausgangsmodul (OMj) einen Ausgangs-Controller (OCj) umfasst, um den Transfer eines jeden von der Matrix (1) empfangenen Pakets an einen Ausgangskanal, welcher dem Paket zugeordnet ist und den assoziierten Ausgangsport (OPj) benutzt, zu steuern,

**dadurch gekennzeichnet, dass** eine sogenannte "detaillierte" Menge von Paketen in Bezug auf ein gegebenes Eingangs- und Ausgangsmodul-Paar (IMi, OMj) als eine Menge von Daten, die ein oder mehrere von diesem Eingangsmodul empfangene(s) Paket(e) mit einer gegebenen Prioritätsstufe, welche(s) einem gegebenen Ausgangskanal dieses Ausgangsmoduls zugeordnet ist/sind, definiert wird, und eine Summe der auf ein selbes Eingangs- und Ausgangsmodul-Paar bezogenen detaillierten Mengen, unabhängig von den Prioritätsstufen und/oder den Ausgangskanälen, eine auf dieses Paar bezogene sogenannte "aggregierte" Menge definiert, wobei der besagte Eingangs-Controller (ICi), der besagte Ausgangs-Controller (OCj) und der besagte zentrale Controller (2) verteilte und in aufeinanderfolgenden Verteilungszyklen (c) ausführbare Verteilerfunktionen integrieren, wobei jeder Verteilungszyklus vier aufeinanderfolgende Phasen (P1-P4) umfasst:

- eine erste Phase (P1), welche durch den Eingangs-Controller (ICi) eines jeden Eingangsmoduls (IMi) ausführbar ist, um jedem Ausgangs-Controller (Ocj) Anforderungen zu senden, welche für sogenannte "geforderte" Mengen (RQijq), die als detaillierte Mengen von in der Warteschlange dieses Eingangsmoduls eingereihten Paketen, die Kandidaten für den Transport auf dem/den jeweiligen von diesem Ausgangs-Controller (OCj) verwalteten Ausgangskanal oder -kanälen sind, definiert sind, repräsentativ sind,
- eine zweite Phase (P2), welche durch den Ausgangs-Controller (OCj) eines jeden Ausgangsmoduls (OMj) ausführbar ist, um in Abhängigkeit von den besagten Anforderungen sogenannte "zulässige" Mengen von Paketen (PGRijq) zu bestimmen, die als detaillierte Mengen von Paketen definiert werden und höchsten jeweils den besagten geforderten Mengen (RQijq) entsprechen, die während einer festgelegten Übertragungsdauer (T) über das Ausgangsmodul übertragen werden können, wobei die aggregierten Mengen, welche diesen zulässigen Mengen entsprechen, sogenannte "zulässige aggregierte" Mengen (APGRij) sind,
- eine dritte Phase (P3), welche von einer zentralen Verteilereinheit (CSC) ausführbar ist, um gemäß den besagten zulässigen aggregierten Mengen (APGRij), die sich auf alle Eingangs- und Ausgangsmodul-Paare (IMi, OMj) beziehen, sogenannte "zugelassene aggregierte" Mengen (AGRij) zu bestimmen, welche als aggregierte Mengen von Paketen, die höchstens jeweils den besagten zulässigen aggregierten Mengen entsprechen, die von der Matrix (1) während der besagten Übertragungsdauer (T) übertragen werden können, definiert sind,
- eine vierte Phase (P4), welche von dem Eingangs-Controller (ICi) eines jeden Eingangsmoduls (IMi) ausführbar ist, um in Abhängigkeit von den besagten zulässigen Mengen (PGRijq) und den besagten zugelassenen aggregierten Mengen (AGRij), welche sich jeweils auf die aus diesem Eingangsmodul (IMi) und aus Ausgangsmodulen gebildeten Paare beziehen, zugelassene detaillierte Mengen (GRijq) von Paketen, die für die jeweiligen Kanäle der Ausgangsmodul bestimmt sind, zu bestimmen, die höchstens den entsprechenden zulässigen detaillierten Mengen (PGRijq) entsprechen und derart bestimmt werden, dass die sich daraus ergebenden aggregierten Mengen die besagten entsprechenden zugelassenen aggregierten Mengen (AGRij) nicht überschreiten.

2. Vermittlungssystem nach Anspruch 1, **dadurch gekennzeichnet, dass** es dafür ausgelegt ist, dass die besagte Übertragungsdauer (T) kürzer ist als die Dauer der besagten Verteilungszyklen, und dass die Beginne der beiden aufeinanderfolgenden Verteilungszyklen zeitlich durch die besagte Übertragungsdauer (T) getrennt sind.

3. Vermittlungssystem nach Anspruch 2, **dadurch gekennzeichnet, dass** jede Phase der besagten Verteilungszyklen eine selbe Dauer hat, welche der besagten Übertragungsdauer (T) entspricht.

4. Vermittlungssystem nach einem der Ansprüche 2 oder 3, **dadurch gekennzeichnet, dass**, wenn während eines gegebenen Zyklus, für einen gegebenen Ausgangskanal und eine gegebene Prioritätsstufe, eine zulässige Menge (PGRijq) niedriger als die entsprechende geforderte Menge (RQijq) ist, ihre Differenz als nicht zulässige geforderte Menge, welcher zu einer entsprechenden zusätzlichen geforderten Menge hinzuzufügen ist, um die im folgenden Zyklus zu berücksichtigende geforderte Menge zu bilden, durch den Ausgangs-Controller (OCj) gespeichert wird, wobei diese zusätzliche geforderte Menge mittels einer im folgenden Zyklus ausgegebenen Anforderung vom Eingangs-Controller (ICi) empfangen wird.

5. Vermittlungssystem nach einem der Ansprüche 2 bis 4, **dadurch gekennzeichnet, dass**, wenn während eines gegebenen Zyklus, für ein gegebenes Eingangs- und Ausgangs-Modulpaar (IMi, OMj), eine zugelassene aggregierte Menge (AGRij) niedriger als die entsprechende zulässige aggregierte Menge (APGRij) ist, ihre Differenz als nicht zugelassene zulässige aggregierte Menge, welcher zu einer entsprechenden zusätzlichen zulässigen aggregierten Menge hinzuzufügen ist, um die im folgenden Zyklus zu berücksichtigende zulässige aggregierte Menge zu bilden, durch die zentrale Verteilereinheit (CSC) gespeichert wird, wobei diese zusätzliche zulässige aggregierte Menge für dieses Paar im folgenden Zyklus berechnet wird, und dass, wenn während eines gegebenen Zyklus, für einen gegebenen Ausgangskanal des Ausgangsmoduls dieses Paars und eine gegebene Prioritätsstufe, eine zugelassene Menge (GRijq) niedriger als die entsprechende zulässige Menge (PGRijq) ist, ihre Differenz als nicht zugelassene zulässige Menge, welche zu einer entsprechenden zusätzlichen zulässigen Menge hinzuzufügen ist, um die im folgenden Zyklus zu berücksichtigende zulässige menge zu bilden, durch den Eingangs-Controller (ICi) gespeichert wird, wobei diese zusätzliche zulässige Menge für dieses Paar im folgenden Zyklus berechnet wird.

6. Vermittlungssystem nach einem der Ansprüche 1 bis 5, **dadurch gekennzeichnet, dass** für das Ausführen der besagten zweiten Phase (P2) in jedem Ausgangs-Controller (OCj) eine Ausgangs-Verteilerfunktion angewendet wird, welche in jedem Verteilungszyklus unter den besagten geforderten Mengen (RQijq) von Paketen, die eine selbe Prioritätsstufe haben und für einen selben Ausgangskanal bestimmt sind, die besagten zulässigen detaillierten Mengen (PGRijq) unter Anwendung einer ersten Billigkeitsregel, welche dazu bestimmt ist, diesen Paketen unabhängig von dem Eingangsmodul (IMi), in dessen Warteschlange sie sich befinden, eine selbe mittlere Verarbeitungspriorität zu gewähren, bestimmt.

7. Vermittlungssystem nach Anspruch 6, **dadurch gekennzeichnet, dass** der besagte Ausgangs-Controller (OCj) fähig ist, mehrere Ausgangskanäle zu verwalten, wobei die besagte Ausgangs-Verteilerfunktion anhand von mehreren Ausgangs-Verteilereinheiten (OSCj, OSCj', OSCj"), welche jeweils den besagten Kanälen zugeordnet sind, ausgeführt wird.

8. Vermittlungssystem nach Anspruch 7, **dadurch gekennzeichnet, dass** jede Ausgangs-Verteilereinheit (OSCj) einen Auswählalgorithmus vom Typ "WFQ" (gewichtetes faires Einreihen) anwendet.

9. Vermittlungssystem nach einem der Ansprüche 1 bis 8, **dadurch gekennzeichnet, dass** für die Durchführung der besagten dritten Phase (P3) in der zentralen Verteilereinheit (CSC) eine Zentralverteilerfunktion eingesetzt wird, welche die besagten zugelassene aggregierten Mengen (AGRij) unter Anwendung einer zweiten Billigkeitsregel, welche dazu bestimmt ist, den betroffenen Paketkandidaten unabhängig von dem berücksichtigten Ziel-Ausgangsport (OP1, OPj, OPn) eine selbe mittlere Verarbeitungspriorität zu gewähren, bestimmt.

10. Vermittlungssystem nach Anspruch 9, **dadurch gekennzeichnet, dass** eine "Eingangskapazität" als eine maximale Menge von Daten, welche während der besagten Übertragungsdauer (T) zwischen einem Eingangsmodul (IMi) und der Matrix (1) übertragen werden kann, definiert wird, wobei die besagte Zentralverteilerfunktion die besagten zugelassenen aggregierten Mengen (AGRij) bestimmt, indem sie jede zulässige aggregierte Menge (APGRij) mit einem Proportionalitätsfaktor multipliziert, welcher gleich 1 ist, wenn die Summe aller auf dieses Eingangsmodul (IMi) bezogenen zulässigen aggregierten Mengen (APGRij) niedriger als die besagte oder gleich der besagten Eingangskapazität ist, und im gegenteiligen Fall im Wesentlichen einen solchen Wert K annimmt, dass das Produkt der Multiplikation dieses Wertes K mit der besagten Summe der zulässigen aggregierten Mengen (APGRij) annähernd der besagten Eingangskapazität entspricht oder höchstens gleich dieser ist.

**Claims**

1. A switching system for a communications network node, comprising a plurality of input modules (IM1, IM2, IMi, Imn) and a plurality of output modules (OM1, OM2, OMj, OMn) each cooperating with a switching matrix (1) and with a central controller (2) controlling said matrix (1), each output module (OMj) possessing a corresponding output port (OPj), said system being capable of selectively routing, via the matrix (1) and said modules, data packets received by said input modules, based on their respective destinations, to respective destination output ports (OP1, OP2, OPj, OPn),

   - each input module (IMi) comprising an input controller (ICi) in order to control means capable of organizing the received packets into queues (Qil, Qij, Qin), one or more levels of priority being selectively assigned to the packets,
   - each output module (OMj) comprising an output controller (OCj) to control the transfer of each packet received from the matrix (1) to an output channel assigned to the packet that goes through the corresponding output port (OPj), **characterized in that** a so-called "detailed" quantity of packets related to a given pair of input and output modules (IMi, OMj) being defined as a quantity of data that makes up packets received by that input module, enjoying a given level of priority and assigned to a given output channel of that output module, with a sum of detailed quantities related to a single pair of input and output modules, independently of the levels of priority and/or output channels, defining a so-called "aggregate" quantity related to that pair,

said input (ICi), output (OCj) and central controllers (2) incorporate distributed arbitration functions that can be executed by successive arbitration cycles (c), each arbitration cycle comprising four successive phases (P1-P4):

- the first phase (P1) that can be executed by the input controller (ICi) of each input modules (IMi) in order to send each output controller (OCj) requests representative of so-called "requested" quantities (RQijq) defined as detailed quantities of packets waiting **in that** input module and candidates to be ported by the respective output channel(s) managed by that output controller (OCj),
- a second phase (P2) that can be executed by the output controller (OCj) of each output module (OMj) in order to determine based on said requests so-called "permissible" quantities of packets (PGRijq) defined as detailed quantities of packets respectively no greater than said requested quantities (RQijq), which that output module is capable of routing for a fixed transfer duration (T), the aggregate quantities corresponding to those permissible quantities being known as "permissible aggregate" (APGRij),
- a third phase (P3) that can be executed by a central arbitration unit (CSC) to determine based on said permissible aggregate quantities (APGRij) related to all pairs of input and output modules (IMi, OMj), so-called "permitted aggregate" quantities (AGRij) defined as aggregate quantities of packets, respectively no greater than said permissible aggregate quantities, which the matrix (1) is capable of transferring during said transfer duration (T),
- a fourth phase (P4) that can be executed by the input controller (ICi) of each input module (IMi) to determine based on said permissible quantities (PGRijq) and said permissible aggregate quantities (AGRij) respectively related to the pairs formed by that input module (IMi) and output modules, permitted detailed quantities (GRijq) of packets intended for the output modules' respective channels, which are no greater than the corresponding permissible detailed quantities (PGRijq) and determined so that the aggregate quantities that result do not exceed said corresponding permissible aggregate quantities (AGRij).

2. A switching system according to claim 1, **characterized in that** it is sized so that said transfer duration (T) is less than the duration of said arbitration cycles, and **in that** the starts of two consecutive arbitration cycled are separated in time by said transfer duration (T).

3. A switching system according to claim 2, **characterized in that** each phase of said arbitration cycles has the same duration, which is equal to said transfer duration (T).

4. A switching system according to one of the claim 2 or 3, **characterized in that** during a given cycle, for a given output channel and a given level of priority, a permissible quantity (PGRijq) is less than the corresponding requested quantity (RQijq), their difference is saved by the controller (OCj) as a non-permissible requested quantity to be added to a corresponding additional requested quantity in order to perform the requested quantity to be taken into account during the following cycles, that additional requested quantity being received from the input controller (ICi) by means of a request sent during the next cycle.

5. A switching system according to one of the claims 2 to 4, **characterized in that** during a given cycle, for a given pair of input and output modules (IMi, OMj), a permitted aggregate quantity (AGRij) is less than the corresponding permissible aggregate quantity (APGRij), their difference is saved by the central arbitration unit (CSC) as a permissible aggregate quantity that may not be added to a corresponding additional permissible aggregate quantity in order to form the permissible aggregate quantity to be taken into account in the next cycle, that additional permissible aggregate quantity being calculated for that pair during the next cycle, and **in that** during a given cycle, for a given output channel of that pair's output module and a given level of priority, a permitted quantity (GRijq) is less than the corresponding permissible quantity (PGRijq), their difference is saved by the input controller (Ici) as a permissible aggregate quantity that may not be added to a corresponding additional permissible aggregate quantity in order to form the permissible aggregate quantity to be taken into account in the next cycle, that additional permissible aggregate quantity being calculated for that pair during the next cycle.

6. A switching system according to one of the claims 1 to 5, **characterized in that** the execution within each output controller (OCj) of said second phase (P2) implements an output arbitration function that determines, during each arbitration cycle, said permissible detailed quantities (PGRijq) from among said requested quantities (RQijq) of packets that have the same level of priority and are intended for a single output channel, by applying a first fairness rule intended to assign those packets a single, average processing priority, regardless of the input module (IMi) where they are waiting.

7. A communication system according to claim 6, **characterized in that** said output controller (OCj) being capable of managing multiple output channels, said output arbitration function is performed by means of multiple output arbitration units (OSCj, OSCj', OSCj") respectively dedicated to said channels.

8. A switching system according to claim 7, **characterized in that** each arbitration unit (OSCj) implements a "WFQ" (Weighted Fair Queuing) choice algorithm.

9. A switching system according to one of the claims 1 to 8, **characterized in that** the execution of said third phase (P3) in the central arbitration unit (CSC) implements a central arbitration function that determines said permitted aggregate quantities (AGRij) by applying a second fairness rule intended to assign those candidate packets a single, average processing priority, regardless of the corresponding recipient output port (OP1, OPj, OPn).

10. A switching system according to claim 9, **characterized in that** an "input capacity" being defined as a maximum quantity of data that may be transferred between an input module (IMi) and the matrix (1) during said transfer duration (T), said central arbitration function determines said permitted aggregate quantities (AGRij) by multiplying each permissible aggregate quantity (APGRij) by a factor of proportionality that equals 1 if the sum of all the permissible aggregate quantities (APGRij) related to that input module (IMi) is less than or equal to said input capacity, and otherwise, and which roughly assumes a value K such that the product of that value K multiplied by said sum of the permissible aggregate quantities (APGRij) is close to and no greater than said input capacity.

## FIG_1

## FIG_2

FIG_3

EP 1 770 927 B1

EP 1 770 927 B1

**FIG_4**

| P1 | P2 | P3 | P4 |

| I1 | I2 | O1 | O2 | O3 | O4 | C1 | C2 | I3 | I4 |

t0   t1   t2   t3   t4   t

Rijq

C

RQijq

PGRijq
APGRij

AGRij

GRijq

**FIG_5**

C1

| P1 | P2 | P3 | P4 |

R1   t0   t1   t2   t3   t4   GR1   t5   t6   t7   t8   t

C2

T

| P1 | P2 | P3 | P4 |

R2   GR2

C3

| P1 | P2 | P3 | P4 |

R3   GR3

C4

| P1 | P2 | P3 | P4 |

R4   GR4

C5

| P1 | P2 | P3 | P4 |

R5   GR5

R1   R2      R3      R4      R5      R6      ————————
     RQ1     RQ2     RQ3     RQ4     RQ5     ————————
             PGR1    PGR2    PGR3    PGR4    ————————
             APGR1   APGR2   APGR3   APGR4   ————————
                     AGR1    AGR2    AGR3    ————————
                             GR1     GR2     ————————

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1549103 A

- US 6633580 B1